# EUROPÄISCHE PATENTSCHRIFT

(11) **EP 2 319 646 B1**
(45) Veröffentlichungstag und Bekanntmachung des Hinweises auf die Patenterteilung: **12.12.2012**
(21) Anmeldenummer: 09013935.3
(22) Anmeldetag: 06.11.2009
(51) Int. Cl.: B23C 5/08, B23D 45/08, B23D 61/08, B23Q 3/155, B27B 5/32

(54) **Wirbeltrennvorrichtung**
Whirling cutting device
Dispositif de coupe par mouvement satellite

(43) Veröffentlichungstag der Anmeldung: 11.05.2011
(73) Patentinhaber: Reika GmbH & Co. KG, 58093 Hagen (DE)
(72) Erfinder: Braun, Hans-Jörg, 58093 Hagen (DE); Martin, Klaus-Dieter, 58300 Wetter (DE)
(74) Vertreter: Dörner, Kötter & Kollegen

(56) Entgegenhaltungen:
- DE-A1- 2 700 037
- DE-U1- 9 113 684
- JP-A- 59 024 911
- US-A1- 2004 083 866

## Beschreibung

Die Erfindung betrifft eine Vorrichtung zum Trennen von rohr- und stangenförmigen Werkstücken im Wirbelverfahren nach dem Oberbegriff des Patentanspruchs 1. Die Erfindung betrifft weiterhin ein Sägeblatt mit Innenverzahnung nach dem Oberbegriff des Patentanspruchs 15.

Beim Wirbelverfahren handelt es sich um ein spanabhebendes Verfahren, bei dem das Werkzeug das Werkstück spiralwirbelartig umkreist. Die Einschnitttiefe wird durch ein oder mehrere, mit hoher Schnittgeschwindigkeit umlaufende Messer, in einem Arbeitsgang hergestellt. Dabei wälzt sich die durch das Schneidwerkzeug gebildete Innenmantelfläche auf der zylindrischen Außenmantelfläche des zu bearbeitenden Werkstücks ab. Dieser Bewegungsvorgang wird der sich ständig kreisen Bewegung des Schneidwerkzeugs überlagert.

Das Wirbelverfahren hat den Vorteil, dass eine Vielzahl von Schneidwerkzeugen, insbesondere Scheidstählen, nebeneinander angeordnet werden können, die über einen größeren Segmentbereich gleichzeitig in Eingriff mit dem Werkstück stehen. Beim Wirbeltrennen wird dabei ein Wirbelsägewerkzeug mit innenliegender Verzahnung eingesetzt. Die Schneidzähne des innenverzahnten Wirbelwerkzeugs können tangential in das Werkstück eindringen. Auf Grund des Wirbelverfahrens braucht der wirksame Eindringradius des Wirbelwerkzeuges nur die Wandstärke des Werkstücks zu umfassen. Handelt es sich hierbei um ein Vollmaterial, so muss das Wirbelwerkzeug nur bis zum Mittelpunkt des Vollmaterials eindringen, da die weitere Hälfte des Werkstücks durch die Umkreisung des Wirbelwerkzeuges abgetrennt wird.

Der Einsatz des Wirbelverfahrens zum Trennen von rohr- und stangenförmigen Werkstücken, wie es beispielsweise aus der US 2004/0083866 A1 bekannt ist, hat sich bewährt, insbesondere können hierbei die Bearbeitungszeiten deutlich reduziert werden. Zeitintensiv gestaltet sich jedoch der Wechsel des innenverzahnten Sägeblattes, bei dem die schweren Sägeblätter von Hand aus der Werkzeugaufnahme entnommen bzw. in diese eingespannt werden müssen. Dies gestaltet sich umso aufwendiger, wenn das Sägeblatt auf Grund eines zeitnah erfolgten Trennvorgangs eine hohe Temperatur aufweist.

Hier will die Erfindung Abhilfe schaffen. Der Erfindung liegt die Aufgabe zu Grunde, eine Vorrichtung der vorgenannten Art zu schaffen, die einen zeitoptimierten Wechsel des Sägeblatts auch bei hoher Sägeblatttemperatur ermöglicht. Gemäß der Erfindung wird diese Aufgabe durch die Merkmale des Patentanspruchs 1 gelöst.

Mit der Erfindung ist eine Vorrichtung zum Trennen rohr- und stangenförmiger Werkstücke im Wirbelverfahren geschaffen, die einen zeitoptimierten Wechsel des Sägeblatts auch bei hohen Sägeblatttemperaturen ermöglicht. Unter dem Begriff "Sägeblatt" sind nachfolgend alle ringförmigen, innenverzahnten Werkzeuge zu subsumieren, die zum Trennen von rohr- und stangenförmigen Werkstücken geeignet sind. Hierunter fallen beispielsweise auch ringförmig ausgebildete Fräswerkzeuge. Dabei ist das Wirbelaggregat innerhalb eines Aggregatportals angeordnet, wobei parallel zu dem Aggregatportal ein wieteres Stützportal angeordnet ist, welches über wenigstens eine Schiene mit dem Aggregatportal verbunden ist, an der eine Wechselvorrichtung über einem Antrieb verschiebbar gelagert ist. Hierdurch ist eine genaue, definierte Linearverschiebung der Wechselvorrichtung innerhalb eines verbindungssteifen Stützsystems bewirkt. Das Zuführen und Entnehmen eines Sägeblatts kann somit auf einer definierten Raumachse erfolgen.

In Ausgestaltung der Erfindung weist die Wechselvorrichtung wenigstens eine Aufnahme für ein Sägeblatt auf, welche Aufnahmefinger umfasst, die mit in dem Sägeblatt vorhandenen Greiföffnungen korrespondieren. Hierdurch ist eine zeitoptimierte, zuverlässige Aufnahme eines Sägeblatts ermöglicht.

In weiterer Ausgestaltung der Erfindung weist die Wechselvorrichtung zwei gegenüberliegend angeordnete Arme auf, welche eine Aufnahme für ein Sägeblatt bilden und an denen jeweils wenigstens ein Aufnahmefinger angeordnet ist. Dabei sind die Arme bevorzugt als Klemmarme ausgebildet, derart, dass sie geeignet sind, ein zu bearbeitendes Werkstück zu handhaben und einzuspannen. Hierdurch ist ein kombinierter Abgreifer bewirkt, der in Form eines integrierten Bauteils sowohl einen Werkzeugwechsel durchführen kann, als auch zur Handhabung und zum Einspannen eines zu bearbeitenden Werkstücks einsetzbar ist. Dadurch wird der benötigte Einbauraum deutlich verringert. Die Verfahrensschritte "Handhabung und Einspannung des Werkstücks" und "Durchführung eines Werkzeugwechsels" können so auf ein und derselben Linearschiene mit ein und demselben Antrieb erfolgen.

In Weiterbildung der Erfindung sind die Klemmarme schwimmend gelagert und weisen gegeneinander verspannbare Klemmbacken auf, wobei eine Fixierung vorgesehen ist, die derart eingerichtet ist, dass die Klemmarme erst bei Anliegen beider Klemmbacken an dem Werkstück verriegelt werden. Hierdurch ist der Gefahr einer Verspannung des Werkstücks bei dessen Einspannung entgegengewirkt. Geringe Ungeradheiten des stangenförmigen Werkstücks können so ausgeglichen werden.

Vorteilhaft erfolgt die Verriegelung mechanisch und formschlüssig. Hierdurch ist ein hohes Maß an Prozesssicherheit der Werkstückeinspannung erzielt.

In Ausgestaltung der Erfindung umfasst die Aufnahme des Wirbelaggregats Indexierstifte, die mit in dem Sägeblatt vorhandenen Indexierbohrungen korrespondieren. Hierdurch ist eine automatische Fixierung eines von der Wechselvorrichtung zugeführten Sägeblatts in definierter Position ermöglicht. Bevorzugt weisen die Indexierstifte Spannelemente zur kraftschlüssigen Verbindung mit dem Sägeblatt auf, welche bevorzugt pneumatisch, hydraulisch oder elektrisch betätigbar sind. Alternativ können in der Aufnahme des Wirbelaggregats an Stelle der Indexierbohrungen auch Indexierbohrungen angeordnet sein, die mit an dem Sägeblatt vorhandenen Indexierbolzen korrespondieren. In diesem Fall weisen die Indexierbohrungen bevorzugt Verriegelungselemente zur kraft- und/oder formschlüssigen Verbindung mit den Indexierbolzen des Sägeblatts auf.

In Weiterbildung der Erfindung weist die Wechselvorrichtung einen verschiebbaren Schlitten zur Zu- und Abführung von Sägeblättern auf, an denen wenigstens eine Aufnahme für ein Sägeblatt angeordnet ist. Dabei weist die Aufnahme vorteilhaft wenigstens einen Haltestift auf, der mit einer in dem Sägeblatt angeordneten Halteöffnung korrespondiert. Hierdurch ist eine zuverlässige Be- und Entladung der Wechselvorrichtung mit Sägeblättern ermöglicht.

In vorteilhafter Ausgestaltung der Erfindung ist der Schlitten auf einer Teleskopschiene angeordnet, über die dieser bewegbar ist. Hierdurch ist der erforderliche Bauraum optimiert.

In Ausgestaltung der Erfindung sind an dem Wirbelaggregat Mittel zur Positionierung der Werkzeugaufnahme in einer definierten Drehposition angeordnet. Hierdurch ist eine identische Anordnung der Werkzeugaufnahme bei jedem Werkzeugwechselvorgang ermöglicht, so dass keine weiteren Positionsangleichungen durch die Wechselvorrichtung erforderlich sind.

In Ausgestaltung der Erfindung ist eine Handhabungseinrichtung zur Be- und Entladung des Schlittens mit Sägeblättern angeordnet. Hierdurch ist eine vollautomatisch Be- und Entladung des Wirbelaggregats mit Sägeblättern ohne erforderliches Bedienpersonal ermöglicht, wodurch ein kontinuierlicher Produktionsablauf gewährleistet ist.

In Weiterbildung der Erfindung weist die Handhabungsvorrichtung Mittel zum Auslesen von Werkzeugdaten aus einem an einem Sägeblatt angeordneten Informationsspeicher auf. Hierdurch ist eine vollautomatisch Auswahl eines geeigneten Sägeblatts vor dem Hintergrund des zu bearbeitenden Werkstücks ermöglicht.

Der Erfindung liegt weiterhin die Aufgabe zu Grunde, ein Sägeblatt zum Einsatz in einer Vorrichtung zum Trennen von rohr- und stangenförmigen Werkstücken zu schaffen, welches einen zeitoptimierten Sägeblattwechsel auch bei hohen Werkzeugtemperaturen ermöglicht. Gemäß der Erfindung wird diese Aufgabe durch die Merkmale des Patentanspruchs 15 gelöst.

In Weiterbildung der Erfindung ist wenigstens eine Halteöffnung angeordnet, die versetzt zu den Greiföffnungen und den Indexierbohrungen angeordnet ist. Diese Halteöffnung ermöglicht eine Fixierung des Sägeblatts an dem Schlitten zur Bestückung der Wechselvorrichtung. Durch die wenigstens eine Halteöffnung kann ein Verriegelungsbolzen des Schlittens geführt werden, wodurch das Sägeblatt an dem Schlitten fixiert ist. Die für die Aufnahme des Sägeblatts an der Wechselvorrichtung erforderlichen Greiföffnungen werden so nicht behindert.

In weiterer Ausgestaltung der Erfindung sind Mittel zur Speicherung von Werkzeuginformationen angeordnet. Hierdurch ist die Identifizierung eines für einen Trennvorgang erforderlichen Sägeblatts ermöglicht. Bei den Mitteln zur Speicherung kann es sich sowohl um taktile, optische (Barcode) oder elektronische (RFID-Chip) Informationsträger handeln. Zum Auslesen der Informationen ist an der Handhabungseinrichtung lediglich ein entsprechendes Lesegerät angeordnet.

Andere Weiterbildungen und Ausgestaltungen der Erfindung sind in den übrigen Unteransprüchen angegeben. Ein Ausführungsbeispiel ist in den Zeichnungen dargestellt und wird nachfolgend im Einzelnen beschrieben. Es zeigen:

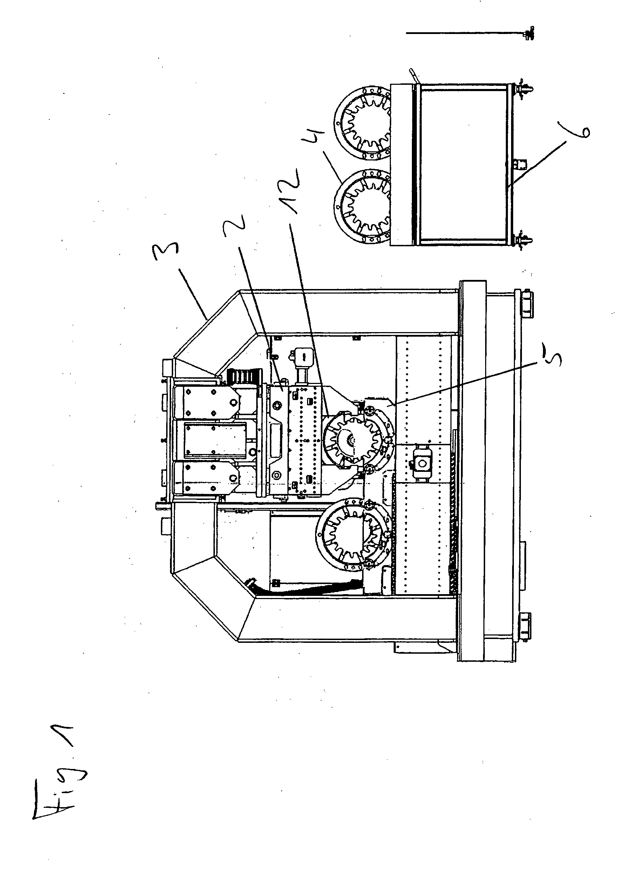

- Figur 1: die schematische Darstellung einer Wirbeltrennvorrichtung in der Ansicht von hinten;

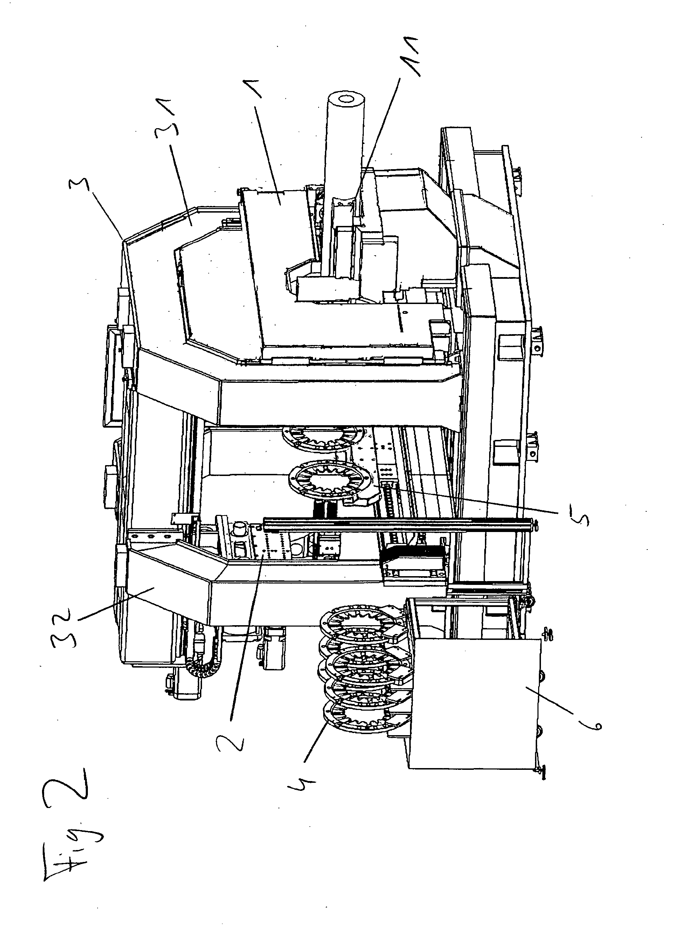

- Figur 2: die Darstellung der Vorrichtung aus Figur 1 in räumlicher Darstellung;

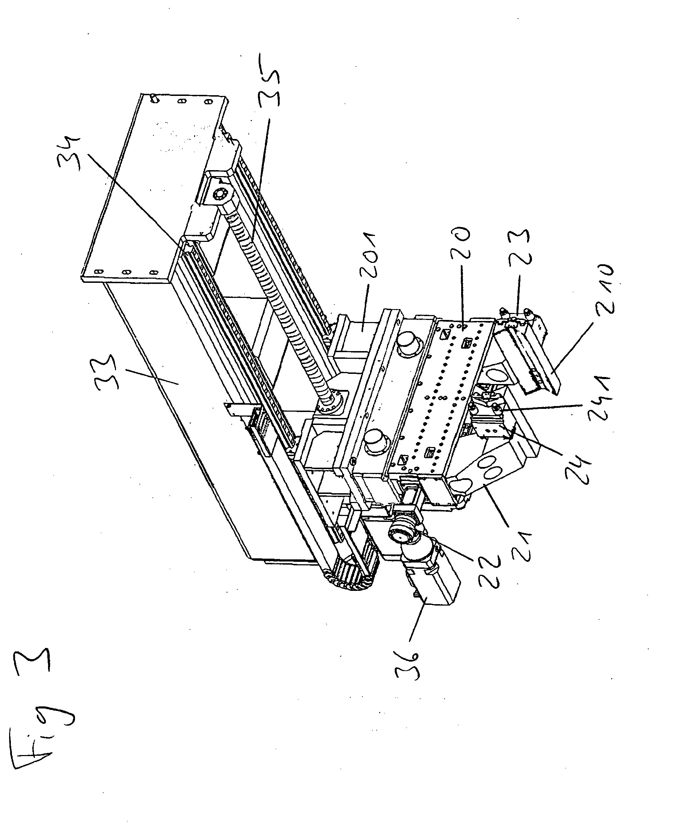

- Figur 3: die Detailansicht des Abgreifers der Vorrichtung aus Figur 1;
- Figur 4: die Detaildarstellung des Schlittens der Vorrichtung aus Figur 1;

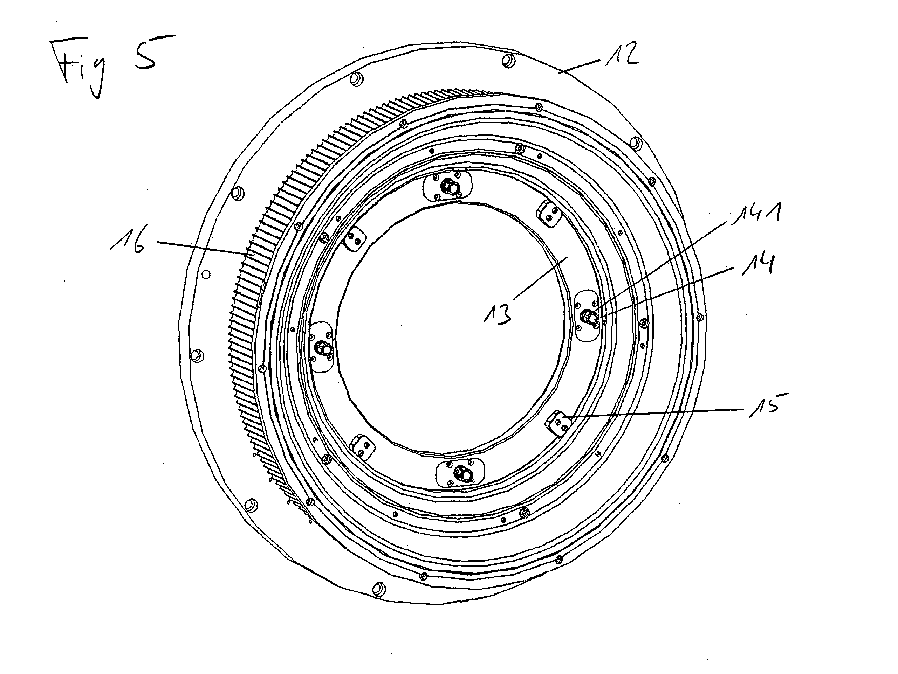

- Figur 5: die Darstellung der Werkzeugaufnahme des Wirbelaggregats der Vorrichtung aus Figur 1;

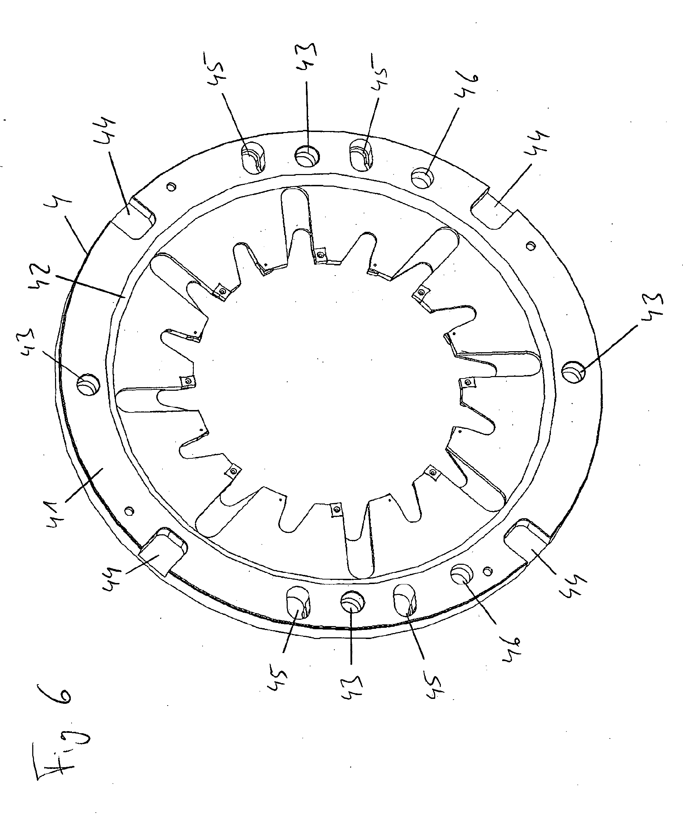

- Figur 6: die Darstellung eines nicht erfinderischen Sägeblatts zum Einsatz in der Vorrichtung aus Figur 1;
- Figur 7: die Darstellung einer Werkzeugaufnahme des Wirbelaggregats in einer weiteren Ausführungsform und

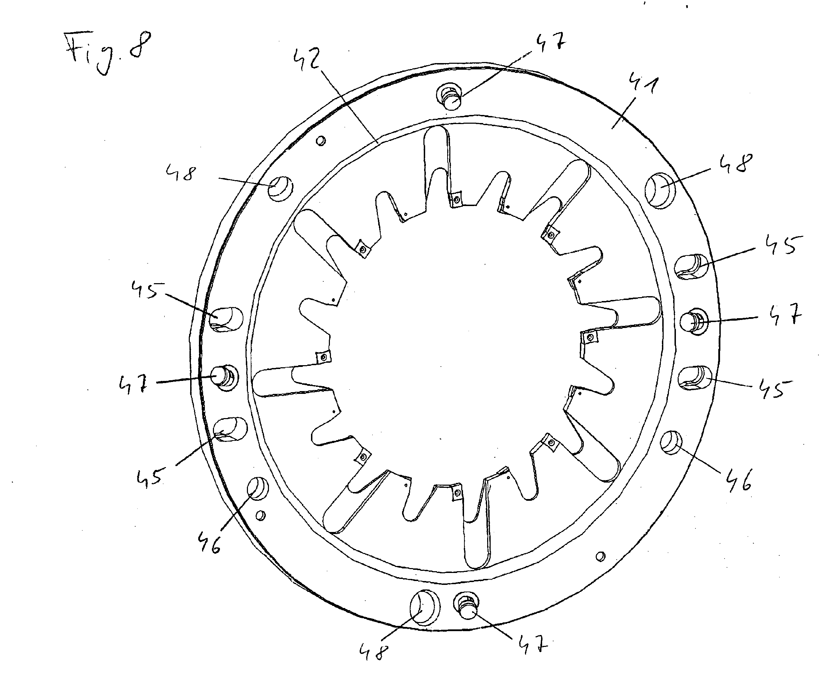

- Figur 8: die Darstellung eines Sägeblatts in einer weiteren Ausführungsform zum Einsatz in der Werkzeugaufnahme nach Figur 7.

Die als Ausführungsbeispiel gewählte Wirbeltrennvorrichtung umfasst ein Wirbelaggregat 1 mit einer Werkstückspannung 11 sowie einen Abgreifer 2, welche in einem Rahmensystem 3 angeordnet sind. Das Rahmensystem 3 ist dabei im Wesentlichen gebildet aus zwei parallel zueinander angeordneten Portalen 31, 32, die kopfseitig über einen Verbindungsträger 33 miteinander verbunden sind. Dabei ist das Wirbelaggregat an dem Aggregatportal 31 befestigt; das Stützportal 32 dient dem Auflager des Verbindungsträgers 33. An dem Verbindungsträger 33 ist eine Schiene 34 befestigt, an der der Abgreifer 2 verschiebbar angeordnet ist.

Das Wirbelaggregat 1 umfasst eine Werkzeugaufnahme 12, die mit einem - nicht dargestellten - Antrieb verbunden ist. Der Antrieb verfügt über einen Winkelgeber, der eine genaue Positionierung der Werkzeugaufnahme ermöglicht. Die Werkzeugaufnahme 12 ist mit einer Kreuztischanordnung verbunden, mittels derer sie über eine Steuerung auf definierten Kurven verfahrbar ist.

Die Werkzeugaufnahme 12 ist im Wesentlichen trommelartig und zur Spanabfuhr konisch ausgebildet. Umlaufend ihrer kreisförmigen Öffnung ist in der Werkzeugaufnahme 12 ein Anlageflansch 13 zur passgenauen Anlage eines Sägeblatts 4 angeordnet. Zur Zentrierung des Sägeblatts 4 in der Werkzeugaufnahme 12 ist der Anlageflansch 13 umlaufend mit einer - nicht dargestellten - Phase versehen, die mit einer entsprechenden Phase 42 des Schneidenträgerrings 41 des Sägeblatts 4 korrespondiert. Umlaufend sind jeweils 90 Grad versetzt zueinander auf dem Anlageflansch 13 vier Indexierstifte 14 angeordnet, welche in korrespondierende Indexierbohrungen 43 des Sägeblatts 4 eingreifen. Die Indexierstifte 14 verfügen über mit Federdruck betätigte Spannelemente 141, über die das Sägeblatt 4 in der Werkzeugaufnahme 12 verspannbar ist. Jeweils 45 Grad versetzt zu den Indexierstiften 14 sind auf dem Anlageflansch 13 umlaufend vier Nutensteine 15 angebracht. Die Nutensteine 15 greifen in korrespondierende Ausbuchtungen 44 des Schneidenträgerrings 41 des Sägeblatts 4 ein. Die Nutensteine 15 dienen der Drehmomentübertragung sowie der Zentrierung des Sägeblatts 4. Umlaufend der trommelförmigen Werkzeugaufnahme 12 ist eine Verzahnung 16 zur Aufnahme eines - nicht dargestellten - Treibriemens angeordnet.

Der Abgreifer 2 umfasst zwei Klemmarme 21, die in einem Gehäuse 20 gegenüberliegend angeordnet und über einen Spannantrieb 22 gegenläufig zentrisch zum Werkstückdurchmesser verfahrbar angeordnet sind. An den Klemmarmen 21 sind gegeneinander verspannbare Klemmbacken 210 angeordnet. Das Gehäuse 20 ist an einem Antriebsflansch 201, über den der Abgreifer 2 entlang der Schienen 34 des Verbindungsträgers 33 verfahrbar ist, schwimmend gelagert. Diese schwimmende Lagerung ist über eine - nicht dargestellte - mechanische Verriegelung fixierbar. Zwischen den Klemmbacken 210 ist ein zu bearbeitendes stangenförmiges Werkstück einspannbar, wobei bei Anlage beider Klemmbacken 210 an dem Werkstück die Position des Abgreifergehäuses 20 über Klemmelemente der mechanischen Verriegelung fixiert wird. Die Klemmbacken 210 sind über einen servogeregelten Spannantrieb 22 gegeneinander verfahrbar. Über den servogeregelten Spannantrieb sind unterschiedliche Spannkräfte einstellbar, so dass durch dünnwandige Rohrabschnitte gespannt werden können, ohne irreversibel verformt zu werden.

An ihrer dem Wirbelaggregat 1 zugewandten Seite sind an den Klemmbacken 210 Aufnahmen 23 angeordnet, welche jeweils zwei gegenüberliegend angeordnete Pneumatikzylinder 24 aufnehmen. Über die Pneumatikzylinder 24 sind Aufnahmefinger 241 zum Durchtritt durch in dem Sägeblatt 4 eingebrachte Greiföffnungen bewegbar. Hierdurch ist eine lagegerechte Fixierung des Sägeblatts 4 an den Aufnahmen 23 bewirkt.

Der Abgreifer 2 ist über das Abgreifergehäuse 20 auf den Schienen 34 des Verbindungsträgers 33 des Rahmensystems 3 verschiebbar gelagert. Die Bewegung entlang der Schienen 34 erfolgt über eine an dem Verbindungsträger 33 angeordnete Spindelachse 35, welche mit einem Spindelantrieb 36 verbunden ist und die durch den Antriebsflansch 201 geführt ist.

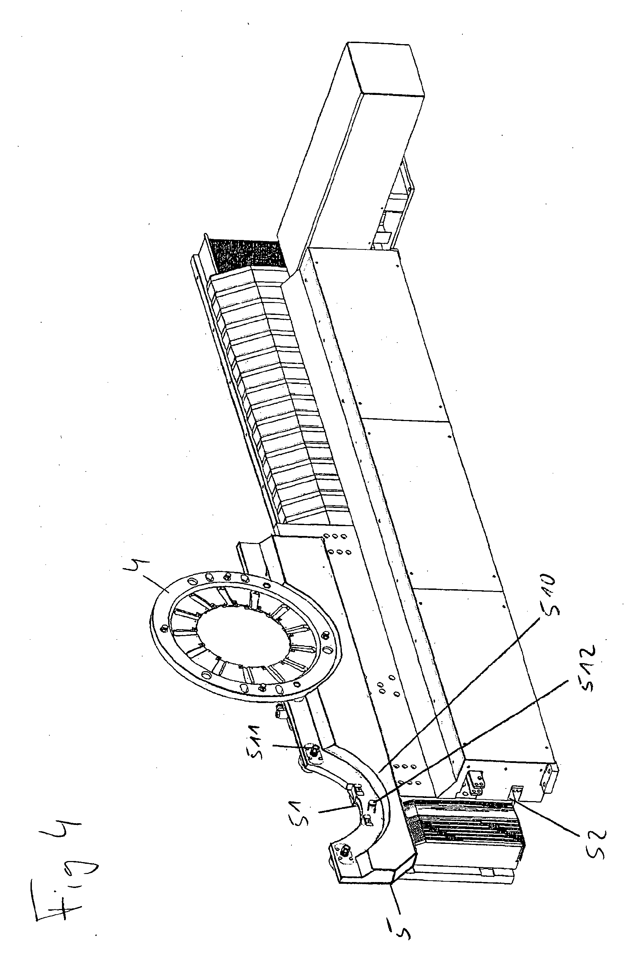

Die Bestückung der Aufnahmen 23 des Abgreifers 2 mit Sägeblättern 4 erfolgt über einen Wechselschlitten 5, der an dem Stützportal 32 des Rahmensystems 3 befestigt ist. Der Wechselschlitten 5 hat im Ausführungsbeispiel zwei Werkzeugaufnahmen 51, wobei eine der Werkzeugaufnahmen 51 zur Aufnahme des neuen Sägeblatts und die andere Werkzeugaufnahme 21 zur Aufnahme des entnommenen Sägeblatts 4 dient. Der Wechselschlitten 5 ist mit einer Teleskopführung 52 verbunden, über die er mittels eines Schiebekettenantriebs 53 verfahrbar ist. Für eine exakte Übergabeposition ist der Wechselschlitten in jeweils definierten Positionen mechanisch verriegelbar. Die jeweiligen Stellungen der Teleskopschlitten der Teleskopführung 52 sind über eingebaute - nicht dargestellte - Bremseinheiten eindeutig definiert. In Figur 4 ist der Wechselschlitten 5 mit voll ausgefahrener Teleskopführung 52 dargestellt.

Die Werkzeugaufnahme 51 umfasst einen Anlageflansch 510, der einen Kreisbogen beschreibt, der im Ausführungsbeispiel 135 Grad des Schneidenträgerrings 41 eines Sägeblatts 4 überdeckt. An seinen gegenüberliegenden Enden sind an den Anlageflansch 510 gegenüberliegend zwei Haltebolzen 511 angeformt, welche mit in dem Schneidenträgerring 41 des Sägeblatts 4 angeordneten Halteöffnungen 46 korrespondieren. Mittig ist zwischen den Haltebolzen 511 an dem Anlageflansch 510 ein Indexierstift 512 angeordnet. Der Indexierstift 512 greift in eine Indexierbohrung 43 des Sägeblatts 4 ein und gewährleistet so eine lagegerechte Aufnahme des Sägeblatts 4.

Zur Bestückung des Werkzeugschlittens 5 ist im Ausführungsbeispiel ein Vorratswagen 6 angeordnet, auf dem Sägeblätter 4 vorgehalten und ausgewechselte Sägeblätter abgelegt werden können. Die Be- und Entladung des Wechselschlittens 5 erfolgt im Ausführungsbeispiel manuell. Gleichsam kann jedoch auch eine Handhabungseinrichtung angeordnet sein, welche die Be- und Entladung des Wechselschlittens 5 übernimmt. Beim Einsatz unterschiedlicher Sägeblätter 4 könnten diese mit einem Informationsträger ausgestattet sein, in dem die wesentlichen Werkzeugdaten abgelegt sind. Diese Informationen können dann über eine an der Handhabungseinheit angeordnete Leseeinrichtung gelesen werden, wodurch die Identifikation unterschiedlicher Sägeblätter möglich ist. Die Identifikation der unterschiedlichen Sägeblatter kann auch über am Wechselschlitten 5 angeordnete Schalterkombinationen erfolgen. Durch spezifische Ausnehmungen in den Sägeblättern 5 werden dabei unterschiedliche, einem jeweiligen Sägeblatttyp zugeordnete Schaltkombinationen angesprochen.

Zur Optimierung des Werkzeugwechsels kommt im Ausführungsbeispiel ein Sägeblatt 4 zum Einsatz, welches aus wechselseitig angeordneten vierfach Wendeplatten 40 besteht, welche von einem Schneidenträgerring 41 begrenzt sind. Der Schneidenträgerring 41 ist zur zentrischen Einbringung des Sägeblatts 4 in die Werkzeugaufnahme 22 des Wirbelaggregats 2 mit einer Phase 42 versehen. Umlaufend sind in dem Schneidenträgerring 41 jeweils 90 Grad zueinander versetzt vier Indexierbohrungen 43 eingebracht, welche mit den Indexierstiften 24 des Wirbelaggregats 2 korrespondieren. Jeweils mittig zwischen zwei Indexierbohrungen 43 ist in den Schneidenträgerring 41 weiterhin eine Ausbuchtung 44 eingebracht, welche mit den Nutensteinen 25 der Werkzeugaufnahme 22 des Wirbelaggregats 2 korrespondieren. Beidseitig zweier gegenüberliegender Indexierbohrungen 43 ist weiterhin in den Schneidenträgerring 41 jeweils eine Greiföffnung 45 eingebracht. Die Greiföffnungen 45 dienen dem Durchtritt der Aufnahmefinger 241 der Aufnahmen 23 zur Fixierung des Sägeblatts 4 an dem Abgreifer 2. Weiterhin sind zwischen zwei gegenüberliegenden Greiföffnungen 45 und zwei gegenüberliegenden Ausbuchtungen 44 gegenüberliegend zwei Halteöffnungen 46 eingebracht. Die Halteöffnungen 46 dienen dem Durchtritt der Haltebolzen 511 der Werkzeugaufnahme 551 des Wechselschlittens 5. Die unterschiedlichen Bohrungen und Durchtrittsöffnungen sind derart angeordnet, dass eine Behinderung der Werkzeugaufnahme 51 des Wechselschlittens 5 und der Aufnahmen 23 des Abgreifers 2 sowie eine Behinderung dieser Aufnahme 23 mit der Werkzeugaufnahme 12 des Wirbelaggregats 1 ausgeschlossen ist.

Im Zuge eines Werkzeugwechsels wird zunächst ein Sägeblatt 4 in eine Werkzeugaufnahme 51 des Wechselschlittens 5 eingebracht, der hierzu vollständig ausgefahren ist. Dabei treten der Indexierstift 512 sowie die Haltebolzen 511 durch die Indexierbohrung 43 bzw. die Halteöffnungen 46 des Sägeblatts 4 durch. Durch die Haltebolzen 511 ist das Sägeblatt 4 in der Werkzeugaufnahme 51 gehalten. Nachfolgend fährt der Wechselschlitten 5 entlang der Teleskopführung 2 soweit ein, dass das Sägeblatt 4 die für die Übergabe des Sägeblatts 4 an den Abgreifer 2 erforderliche Position einnimmt. Der Abgreifer 2 wird entlang der Schiene 32 des Rahmensystems 3 vor das Sägeblatt 4 verfahren und die Aufnahmefinger 241 werden durch die Greiföffnungen 45 des Sägeblatts 4 bewegt. Nach Fixierung des Sägeblatts 4 durch die Aufnahmefinger 241 wird das Sägeblatt 4 durch die Haltebolzen 511 des Wechselschlittens freigegeben.

Der Abgreifer 3 verfährt nun über den Spindelantrieb 36 entlang der Schiene 34 des Rahmensystems 3 vor die Werkzeugaufnahme 22 des Wirbelaggregats 1, bis die Indexierstifte 14 der Werkzeugaufnahme 22 durch die Indexierbohrungen 43 des Sägeblatts 4 hindurchtreten und der Schneidenträgerring 41 an dem Anlageflansch 13 in der Werkzeugaufnahme 12 anliegt. Die Spannelemente 141 der Indexierstifte 4 werden nun federdruckbeaufschlagt an die Indexierbohrungen angepresst, so dass das Sägeblatt 4 in der Werkzeugaufnahme 12 des Wirbelaggregats 1 fixiert ist. Anschließend werden die Aufnahmefinger 241 aus den Greiföffnungen 45 des Sägeblatts 4 herausgefahren und der Abgreifer 2 wird entlang der Schienen 34 des Verbindungsträgers 33 aus dem Wirbelaggregat 1 herausgefahren.

Nachdem das Werkstück für den nachfolgenden Trennvorgang durch die Werkstückzuführung 11 durch das Wirbelaggregat 1 hindurchgeführt wurde, wird es zwischen den Klemmbacken 211 des Abgreifers 2 fixiert. Nach Anlegen der Klemmbacken 210 an dem Werkstück werden die Klemmarme mechanisch verriegelt.

Im Anschluss an den Trennvorgang kann das abgetrennte Werkstückteil über den Abgreifer 2 abgelegt werden. Das Entnehmen eines Sägeblatts aus der Werkzeugaufnahme 12 des Wirbelaggregats 1 erfolgt in umgekehrter Reihenfolge. Dabei wird das entnommene Sägeblatt 4 nach entsprechender Positionierung des Wechselschlittens 5 in der freien Werkzeugaufnahme 51 abgelegt; anschließend wird der Wechselschlitten 5 derart positioniert, dass ein zuvor in die weitere Werkzeugaufnahme 51 eingelegtes Sägeblatt 4 durch den Abgreifer 2 aufgenommen werden kann.

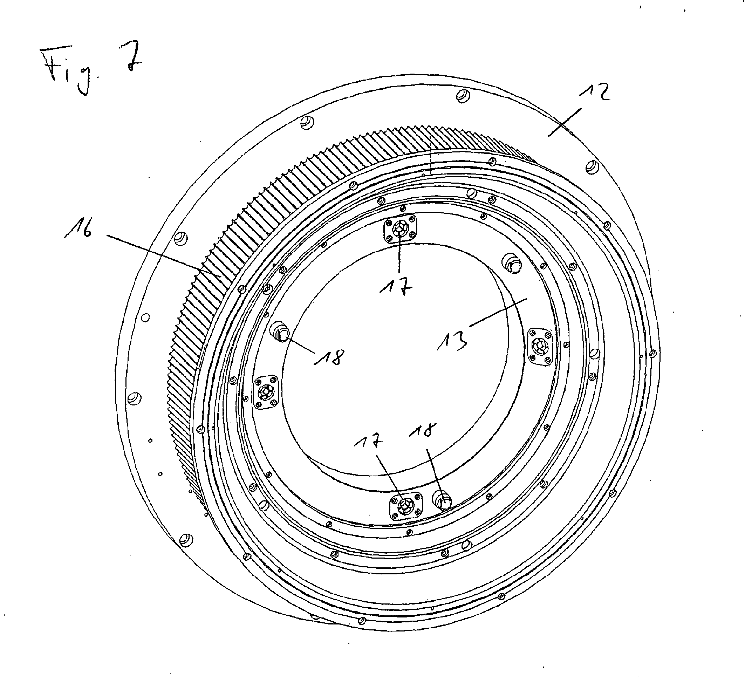

Im Ausführungsbeispiel gemäß Figur 7 sind auf dem Anlageflansch 13 der Werkzeugaufnahme 12 umlaufend jeweils 90 Grad versetzt zueinander vier Indexierbohrungen 17 angeordnet, in die korrespondierende Indexierbolzen 47 des Sägeblatts 4 eingreifen. Die Indexierbohrungen 17 verfügen Verriegelungselemente, über welche die Indexierbolzen 47 des Sägeblatts 4 in der Werkzeugaufnahme 12 fixierbar sind.

Jeweils 120 Grad versetzt zueinander sind auf dem Anlageflansch 13 umlaufend drei Zentrierbolzen 18 angebracht. Die Zentrierbolzen 18 greifen in korrespondierende Zentrierbohrungen 48 des Schneidenträgerrings 41 des Sägeblatts 4 ein. Die Zentrierbolzen 18 dienen der Drehmomentübertragung sowie der Zentrierung des Sägeblatts 4.

## Patentansprüche

1. Vorrichtung zum Trennen von rohr- und stangenförmigen Werkstücken im Wirbelverfahren, umfassend ein Wirbelaggregat, an dem eine drehbar gelagerte, mit einem Antrieb verbundene Aufnahme für ein Sägeblatt mit Innenverzahnung angeordnet ist, wobei Aufnahme und Sägeplatt mit korrespondierenden Referenzmitteln zur Fixierung des Sägeblatts in einer definierten Position versehen sind, **dadurch gekennzeichnet, dass** Mittel zum automatischen Wechsel des Sägeblatts angeordnet sind, wobei das Wirbelaggregat innerhalb eines Aggregatportals (31) angeordnet ist, wobei parallel zu dem Aggregatportal ein weiteres Stützportal (32) angeordnet ist, welches über wenigstens eine Schiene (34) mit dem Aggregatportal (31) verbunden ist, an der eine Wechselvorrichtung (2) über einen Antrieb (36) verschiebbar gelagert ist.

2. Vorrichtung nach Anspruch 1, **dadurch gekennzeichnet, dass** die Wechselvorrichtung (2) wenigstens eine Aufnahme (23) für ein Sägeblatt (4) aufweist, welche Aufnahmefinger (241) umfasst, die mit in dem Sägeblatt (4) vorhandenen Greiföffnungen (45) korrespondieren.

3. Vorrichtung nach Anspruch 2, **dadurch gekennzeichnet, dass** die Wechselvorrichtung (2) zwei gegenüberliegend angeordnete Arme (21) aufweist, welche eine Aufnahme für ein Sägeblatt bilden und an denen jeweils wenigstens ein Aufnahmefinger (241) angeordnet ist.

4. Vorrichtung nach Anspruch 3, **dadurch gekennzeichnet, dass** die Arme als Klemmarme ausgebildet sind, derart, dass sie geeignet sind, ein zu bearbeitendes Werkstück zu handhaben und einzuspannen.

5. Vorrichtung nach Anspruch 4, **dadurch gekennzeichnet, dass** die Klemmarme (21) schwimmend gelagert sind und gegeneinander verspannbare Klemmbacken (210) aufweisen, wobei eine Verriegelung vorgesehen ist, die derart eingerichtet ist, dass die Klemmarme (21) erst bei Anlage beider Klemmbacken (210) an dem Werkstück verriegelt werden.

6. Vorrichtung nach Anspruch 5, **dadurch gekennzeichnet, dass** die Verriegelung mechanisch und formschlüssig erfolgt.

7. Vorrichtung nach einem der Ansprüche 3 bis 6, **dadurch gekennzeichnet, dass** die Aufnahme (12) des Wirbelaggregats (1) Indexierstifte (14) umfasst, die mit in dem Sägeblatt (4) vorhandenen Indexierbohrungen (43) korrespondieren.

8. Vorrichtung nach Anspruch 7, **dadurch gekennzeichnet, dass** die Indexierstifte (14) Spannelemente (141) zur kraftschlüssigen Verbindung mit dem Sägeblatt (4) aufweisen, welche pneumatisch, hydraulisch oder elektrisch betätigbar sind.

9. Vorrichtung nach einem der Ansprüche 2 bis 8, **dadurch gekennzeichnet, dass** die Wechselvorrichtung (2) einen verschiebbaren Schlitten (5) zur Zu- und Abführung von Sägeblättern (4) aufweist, an dem wenigstens eine Aufnahme (51) für ein Sägeblatt angeordnet ist.

10. Vorrichtung nach Anspruch 9, **dadurch gekennzeichnet, dass** die Aufnahme (51) wenigstens einen Haltebolzen (511) aufweist, der mit einer in dem Sägeblatt (4) angeordneten Halteöffnung (46) korrespondiert.

11. Vorrichtung nach Anspruch 9, **dadurch gekennzeichnet, dass** der Schlitten (5) auf einer Teleskopschiene (52) angeordnet ist, über die dieser bewegbar ist.

12. Vorrichtung nach einem der vorgenannten Ansprüche, **dadurch gekennzeichnet, dass** an dem Wirbelaggregat (1) Mittel zur Positionierung der Werkzeugaufnahme (12) in eine definierte Drehposition angeordnet sind.

13. Vorrichtung nach einem der Ansprüche 9 bis 11, **dadurch gekennzeichnet, dass** eine Handhabungseinrichtung zur Be- und Entladung des Schlittens (5) mit Sägeblättern (4) angeordnet ist.

14. Vorrichtung nach Anspruch 13, **dadurch gekennzeichnet, dass** die Handhabungsvorrichtung Mittel zum Auslesen von Werkzeugdaten aus einem an einem Sägeblatt (4) angeordneten Informationsspeicher aufweist.

15. Sägeblatt mit Innenverzahnung zum Einsatz in einer Vorrichtung nach einer der Ansprüche 7 bis 12, **dadurch gekennzeichnet, dass** wenigstens eine Indexierbohrung (43) angeordnet ist, wobei wenigstens ein Indexierbolzen (47) vorhanden ist und wenigstens zwei Greiföffnungen (45) zum Durchtritt eines Aufnahmefingers vorhanden sind, die als Langloch ausgebildet und versetzt zueinander angeordnet sind.

16. Sägeblatt nach Anspruch 15, **dadurch gekennzeichnet, dass** wenigstens eine Halteöffnung (46) angeordnet ist, die versetzt zur den Greiföffnungen (45) und den Indexierbohrungen (43) bzw. Indexierbolzen (47) angeordnet ist.

17. Sägeblatt nach Anspruch 16 **dadurch gekennzeichnet, dass** Mittel zur Speicherung von Werkzeuginformationen angeordnet sind.

## Claims

1. Device for cutting tubular and rod-shaped workpieces by the whirling process, comprising a whirling assembly on which a rotatably-mounted seat for a saw-blade with internal toothing is arranged, which rotatably mounted seat is connected to a drive unit, where the seat and the saw blade have corresponding reference means for fixing the saw blade in a defined position, **characterised in that** means are provided for automatically changing the saw blade, where the whirling assembly is arranged inside an assembly portal (31), where a further support portal (32) is arranged parallel to the assembly portal which is connected to the assembly portal (31) via at least one rail (34), on which a changing device (2) is mounted to be moved by a drive system (36).

2. Device according to claim 1, **characterised in that** the changing device (2) has at least one seat (23) for a saw blade (4) which seat comprises retaining fingers (241) which correspond to the gripping holes (45) in the saw blade (4).

3. Device according to claim 2, **characterised in that** the changing device (2) has two arms (21) arranged opposite one another which form a seat for a saw blade and on each of which at least one retaining finger (241) is arranged.

4. Device according to claim 3, **characterised in that** the arms are formed as clamping arms in such a way that they are suitable for handling and clamping a workpiece for processing.

5. Device according to claim 4, **characterised in that** the clamping arms (21) are mounted floatingly and have clamping jaws (210) which can be tightened against one another, where a locking device is provided which is fitted in such a way that the clamping arms (21) do not become locked until both clamping jaws (210) are resting against the workpiece.

6. Device according to claim 5, **characterised in that** the locking process is mechanical and positive-fitting.

7. Device according to any of the claims 3 to 6, **characterised in that** the seat (12) of the whirling assembly (1) has indexing pins (14) which correspond to the indexing holes (43) in the saw blade (4).

8. Device according to claim 7, **characterised in that** the indexing pins (14) have clamping elements (141) for non-positive connection to the saw blade (4), which may be activated pneumatically, hydraulically or electrically.

9. Device according to any of the claims 2 to 8, **characterised in that** the changing device (2) has a movable carriage (5) for carrying saw blades (4) to and from the device, on which carriage (5) there is at least one holder (51) for a saw blade.

10. Device according to claim 9, **characterised in that** the holder (51) has at least one retaining pin (511) corresponding to a retaining opening (46) in the saw blade (4).

11. Device according to claim 9, **characterised in that** the carriage (5) is arranged on a telescopic rail (52), along which it can be moved.

12. Device according to any of the preceding claims, **characterised in that** on the whirling assembly (1) means are arranged of positioning the tool seat (12) to a defined rotating position.

13. Device according to any of the claims 9 to 11, **characterised in that** a handling device is provided for loading and unloading the carriage (5) with saw blades (4).

14. Device according to claim 13, **characterised in that** the handling device has means of reading data from a data memory arranged on a saw blade (4).

15. Saw blade with internal toothing for use in a device according to any of the claims 7 to 12, **characterised in that** at least one indexing bore (43) is arranged, where there is at least one indexing pin (47) and at least two gripping holes (45) to receive a retaining finger, which are formed as a slot and arranged offset to one another.

16. Device according to claim 15, **characterised in that** at least one retaining opening (46) is arranged offset to the gripping holes (45) and the indexing holes (43) and the indexing pin (47).

17. Saw blade according to claim 16, **characterised in that** means of storing tooling information are provided.

## Revendications

1. Dispositif destiné à couper des pièces tubulaires et en forme de barres selon un procédé à mouvement satellite, comprenant un groupe générateur du mouvement satellite contre lequel est agencé, tournant sur palier et relié à un entraînement, un réceptacle de lame de scie à denture intérieure, sachant que le réceptacle et la lame de scie sont dotés de moyens de référence correspondants servant à immobiliser la lame de scie sur une position définie, **caractérisé en ce que** des moyens sont agencés pour changer automatiquement la lame de scie, sachant que le groupe générateur du mouvement satellite est agencé dans un portique (31), sachant qu'un portique supplémentaire de soutènement (32) est agencé parallèle au portique du groupe, portique de soutènement qui est relié au portique du groupe (31) par au moins un rail (34) sur lequel un dispositif de changement (2) en appui se déplace au moyen d'un entraînement (36).

2. Dispositif selon la revendication 1, **caractérisé en ce que** le dispositif de changement (2) présente au moins un réceptacle (23) de lame de scie (4), lequel réceptacle comprend des doigts réceptacles (241) qui correspondent avec les orifices de préhension (45) ménagés dans la lame de scie (4).

3. Dispositif selon la revendication 2, **caractérisé en ce que** le dispositif de changement (2) présente deux bras (21) agencés l'un en face l'autre, bras qui forment un réceptacle pour une lame de scie et contre lesquels est agencé respectivement au moins un doigt réceptacle (241).

4. Dispositif selon la revendication 3, **caractérisé en ce que** les bras sont configurés sous forme de bras de bridage de sorte qu'ils soient capables de manier et de serrer une pièce à usiner.

5. Dispositif selon la revendication 4, **caractérisé en ce que** les bras de bridage (21) sont en appui flottant et présentent des mâchoires de bridage (210) serrables l'une contre l'autre, sachant qu'est prévu un verrouillage configuré de sorte que les bras de bridage (21) ne soient verrouillés que lorsque les deux mâchoires de bridage (210) appliquent contre la pièce.

6. Dispositif selon la revendication 5, **caractérisé en ce que** le verrouillage a lieu mécaniquement et par adhérence de formes.

7. Dispositif selon l'une des revendications 3 à 6, **caractérisé en ce que** le réceptacle (12) du groupe de coupe par mouvement satellite (1) comprend des tiges d'indexation (14) qui correspondent aux alésages d'indexation (43) ménagés dans la lame de scie (4).

8. Dispositif selon la revendication 7, **caractérisé en ce que** les tiges d'indexation (14) présentent des éléments de serrage (141) permettant d'établir une jonction par adhérence de forces avec la lame de scie (4), éléments qui sont actionnables par air comprimé, liquide hydraulique ou par l'électricité.

9. Dispositif selon l'une des revendications 2 à 8, **caractérisé en ce que** le dispositif de changement (2) présente un chariot (5) déplaçable pour amener et éloigner les lames de scie (4), chariot contre lequel est agencé au moins un réceptacle (51) pour une lame de scie.

10. Dispositif selon la revendication 9, **caractérisé en ce que** le réceptacle (51) présente au moins un goujon de retenue (511) correspondant avec un orifice de retenue (46) agencé dans la lame de scie (4).

11. Dispositif selon la revendication 9, **caractérisé en ce que** le chariot (5) est agencé sur un rail télescopique (52) via lequel ledit chariot peut se déplacer.

12. Dispositif selon l'une des revendications précédentes, **caractérisé en ce qu'**ont été agencés contre le groupe de coupe par mouvement satellite (1) des moyens permettant d'amener le réceptacle (12) d'outil sur une position de rotation définie.

13. Dispositif selon l'une des revendications 9 à 11, **caractérisé en ce qu'**est agencé un équipement de maniement servant à charger et décharger des lames de scie (4) sur le chariot (5).

14. Dispositif selon la revendication 13, **caractérisé en ce que** le dispositif de maniement présente des moyens permettant de lire les données d'outil depuis une mémoire d'information agencée contre une lame de scie (4).

15. Lame de scie à denture intérieure, à mettre en oeuvre dans un dispositif selon l'une des revendications 7 à 12, **caractérisée en ce qu'**au moins un alésage d'indexation (43) est agencé, sachant qu'au moins un goujon d'indexation (47) est présent et qu'au moins deux orifices de préhension (45) servant au passage d'un doigt réceptacle sont présents, configurés en orifices oblongs et agencés décalés l'un par rapport à l'autre.

16. Lame de scie selon la revendication 15, **caractérisée en ce qu'**au moins un orifice de retenue (46) est agencé décalé par rapport aux orifices de préhension (45) et aux alésages d'indexation (43) et/ou aux goujons d'indexation (47).

17. Lame de scie selon la revendication 16, **caractérisée en ce que** sont agencés des moyens permettant d'enregistrer des informations outils.
